# EUROPÄISCHE PATENTSCHRIFT

(11) **EP 0 897 061 B1**
(45) Veröffentlichungstag und Bekanntmachung des Hinweises auf die Patenterteilung: **23.04.2003**
(21) Anmeldenummer: 98114351.4
(22) Anmeldetag: 30.07.1998
(51) Int. Cl.: F02P 17/12

(54) **Verfahren zur Erkennung von Zündaussetzern bei einer Brennkraftmaschine mit zwei Zündkerzen pro Zylinder**
Misfire detection method for internal combustion engine having two spark plugs per cylinder
Méthode pour détecter des ratés d' allumage pour un moteur ayant deux bougies par cylindre

(30) Priorität: 13.08.1997 DE 19735010
(43) Veröffentlichungstag der Anmeldung: 17.02.1999
(73) Patentinhaber: DaimlerChrysler AG, 70567 Stuttgart (DE)
(72) Erfinder: Hohner, Peter, 70771 Leinfelden-Echterdingen (DE); Schenk, Jürgen, 73095 Albershausen (DE); Wilstermann, Hartung, 74405 Gaildorf (DE)

(56) Entgegenhaltungen:
- DE-A- 4 303 267
- DE-C- 19 526 644
- US-A- 5 247 919
- US-A- 5 305 635
- US-A- 5 396 176
- US-A- 5 510 715

## Beschreibung

Die Erfindung betrifft ein Verfahren zur Erkennung von Zündaussetzern bei einer Brennkraftmaschine mit zwei Zündkerzen pro Zylinder durch lonenstrommessung an den Zündkerzen.

Bei einem bekannten Verfahren zum Erkennen von Zündaussetzern bei einer Brennkraftmaschine mit zwei Zündkerzen pro Zylinder (DE 44 37 480) werden Zündaussetzer durch Erkennung der Laufunruhe der Brennkraftmaschine erkannt, wobei die erste Zündkerze in einem Zylinder über das Laufunruheverfahren überprüft wird, nachdem die zweite Zündkerze in diesem Zylinder abgeschaltet wurde. Die für dieses Verfahren erforderliche Einrichtung ist verhältnismäßig aufwendig.

Aus der gattungsgemäßen Offenlegungsschrift DE 43 03 267 A1 ist eine Motorsteuervorrichtung bekannt, welcher eine Fehlzündungsermittlungseinrichtung zugeordnet ist. Die Fehlzündungsermittlungseinrichtung enthält einen lonenstromdetektor, welcher den lonenstrom in zumindest einem der Motorzylinder misst. Der gemessene Ionenstromwert kann nach einer Signalumformung als Spitzenhaltewert oder als integrierter Wert mit einem Bezugspegel verglichen werden, um eine Fehlzündungsentscheidung herbeizuführen.

Der Erfindung liegt die Aufgabe zugrunde, ein Verfahren zu schaffen, mit dem eine sichere Erkennung von Zündaussetzern bei einer Brennkraftmaschine mit zwei Zündkerzen pro Zylinder mit einfachen Mitteln ermöglicht ist.

Diese Aufgabe wird erfindungsgemäß durch die Merkmale des Anspruchs 1 gelöst.

Verfahren zur Diagnose der Zündkerze aus dem lonenstromsignal an der Zündkerze sind beispielsweise aus den DE 195 24 539, 195 24 540 und 195 24 541 sowie aus der nicht vorveröffentlichten Patentanmeldung 197 20 532.1 bekannt.

Verbrennungsaussetzer können mit Hilfe der lonenstrommessung an der Zündkerze dadurch erkannt werden, daß bei einer defekten Zündkerze kein lonenstromsignal vorhanden ist. Dies ist darin begründet, daß die lonenstrommessung eine Information über den Zustand des verbrannten Gemisches im Bereich der Zündkerze liefert. Ist das Gemisch um die Zündkerze noch nicht verbrannt, wird kein lonenstromsignal erzeugt.

Bei einer Brennkraftmaschine mit zwei Zündkerzen pro Zylinder werden die beiden Zündkerzen gleichzeitig oder mit geringem zeitlichen Versatz gezündet. Nach der Zündung breitet sich die Verbrennung ausgehend von den Zündkerzen im Brennraum aus. Die Zündkerzen befinden sich aufgrund der von ihnen fortschreitenden Flamme immer im verbrannten Gemisch und zeigen somit ein lonenstromsignal an. Wenn eine der beiden Zündkerzen defekt ist und daher keinen Zündfunken erzeugt, so hat dies zur Folge, daß an dieser Zündkerze kein lonenstromsignal erzeugt wird, bis die Flamme von der korrekt gezündeten Zündkerze die defekte Zündkerze erreicht. Die defekte Zündkerze liefert somit kein lonenstromsignal, bis die Flamme den Brennraum durchlaufen hat. An der korrekt gezündeten Zündkerze ist gleich nach dem Funkenende ein lonenstromsignal meßbar. Durch den Vergleich der Integratorwerte der lonenstromsignale der beiden Zündkerzen miteinander bei gleichzeitiger Messung der lonenstromsignale (Anspruch 1) kann somit eine defekte Zündkerze einwandfrei erkannt werden, da ihr Integratorwert aufgrund des Umstandes, daß bei ihr ein lonenstromsignal erst dann entsteht, wenn die Flamme sie erreicht hat, wesentlich kleiner ist als derjenige der gezündeten Zündkerze.

Defekte Zündkerzen besitzen in der Regel entweder einen zu großen Elektrodenabstand aufgrund des Abbrandes oder einen Isolatorfußriß, der zu einem Zündfunken im Isolator und nicht zwischen den Elektroden der Zündkerze führt. Beide Fehler beeinträchtigen die lonenstrommessung nicht, da sie bei wesentlich höheren Spannungen als bei der lonenstrommessung auftreten. Wird eine defekte Zündkerze erkannt, so muß der Kunde noch nicht zwingend in die Werkstatt, da die intakte Zündkerze das Gemisch vollständig verbrennen kann und es zu keinen erhöhten Abgasemissionen kommt.

Bei dem vorgeschlagenen Verfahren liefert ein Verbrennungsaussetzer, der nicht auf eine defekte Zündkerze, sondern beispielsweise auf den Ausfall des Einspritzventils zurückzuführen ist, an beiden Zündkerzen kein Ionenstromsignal. Kein Ionenstromsignal an beiden Zündkerzen ist also ein Indiz dafür, daß der Verbrennungsaussetzer eine andere Ursache haben muß. Der Fall, daß beide Zündkerzen defekt sind und kein Ionenstromsignal liefern, ist äußerst unwahrscheinlich.

Eine erhöhte Erkennungssicherheit ergibt sich, wenn der Integratorwert vor dem Zeitpunkt nach der Zündung, zu dem die Flamme von einer Zündkerze zu der anderen gelangen würde, abgefragt wird. Ist dieser Integrationswert Null bei einer der beiden Zündkerzen und größer Null nach dem gesamten Verbrennungszyklus, so ist die entsprechende Zündkerze defekt. Die Zeit, die die Flamme zur Durchlaufen des Brennraumes benötigt, kann aus motorischen Parametern wie z.B. Drehzahl, Last und/oder Kraftstoff-Luft-Verhältnis berechnet werden.

Das erfindungsgemäße Verfahren ist in dem Blockschaubild veranschaulicht. Darin bedeutet
I = Ionenstromsignal
ZZP = Zündzeitpunkt
t_{fl} = Flammenankunft an defekter Zündkerze B

Wie ersichtlich, wird bei korrekter Zündung (Zündkerze A) unmittelbar nach der Zündung ein kräftiges Ionenstromsignal erzeugt, während bei einer defekten Zündkerze (Zündkerze B) erst nach dem Zeitraum t_{fl} nach der Zündung, den die Flamme braucht, um von der Zündkerze A zur Zündkerze B zu gelangen, ein (wesentlich kleineres) Ionenstromsignal entsteht. Durch Aufintegrieren der beiden Ionenstromsignale über einen vollen Verbrennungszyklus und Vergleichen der Integratorwerte miteinander läßt sich feststellen, welche Kerze defekt ist, im vorliegenden Fall die Kerze B.

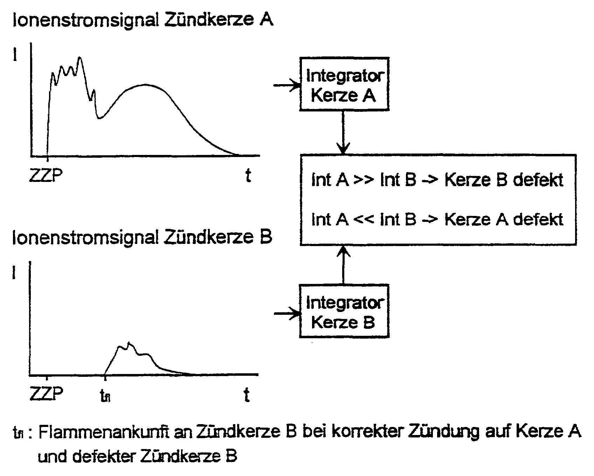

## Patentansprüche

1. Verfahren zur Erkennung von Zündaussetzern bei einer Brennkraftmaschine aus einem lonenstromsignal einer Zündkerze, wobei das lonenstromsignal gemessen und über einen zugeordneten Integrator aufintegriert wird,
**dadurch gekennzeichnet, dass**
die Brennkraftmaschine pro Zylinder zwei Zündkerzen aufweist, wobei die lonenstromsignale beider Zündkerzen jedes Zylinders gleichzeitig gemessen und jeweils über einen zugeordneten Integrator über den gesamten Verbrennungszyklus aufintegriert werden, worauf die Integratorwerte der beiden Zündkerzen miteinander verglichen werden.

2. Verfahren nach Anspruch 1,
**dadurch gekennzeichnet, dass**
der Integratorwert vor dem Zeitpunkt nach der Zündung, zu dem die Flamme von der einen Zündkerze zu der anderen gelangen würde, abgefragt wird.

## Claims

1. Method of recognising ignition breakdown in an internal combustion engine from an ion flow signal of a spark plug wherein the ion flow signal is measured and integrated by means of an associated integrator
**characterised in that**
the internal combustion engine has two spark plugs per cylinder wherein the ion flow signals of the two spark plugs of each cylinder are measured at the same time and are respectively integrated by means of an associated integrator over the entire combustion cycle, after which the integration values of the two spark plugs are compared with each other.

2. Method according to claim 1
**characterised in that**
the integrator value is requested before the moment after ignition, at which the flame would go from one spark plug to the other.

## Revendications

1. Procédé pour détecter des ratés d'allumage dans un moteur à combustion interne à partir d'un signal de courant ionique d'une bougie d'allumage, le signal de courant ionique étant mesuré et étant intégré via un intégrateur associé,
**caractérisé en ce que**
le moteur à combustion interne possède deux bougies par cylindre, les signaux de courant ionique des deux bougies de chaque cylindre étant mesurés simultanément et étant intégrés via un intégrateur associé respectif sur la totalité du cycle de combustion, suite à quoi les valeurs d'intégration des deux bougies sont comparées l'une avec l'autre.

2. Procédé selon la revendication 1, **caractérisé en ce que** la valeur d'intégration est interrogée avant l'instant après l'allumage auquel la flamme passerait d'une bougie à l'autre.
